(19) Europäisches Patentamt
European Patent Office
Office européen des brevets

(11) Publication number : **0 392 792 B1**


# (12) EUROPEAN PATENT SPECIFICATION


(45) Date of publication of patent specification : **23.11.94 Bulletin 94/47**

(51) Int. Cl.$^{5}$ : **H04B 1/68**

(21) Application number : **90303819.8**

(22) Date of filing : **10.04.90**


## (54) Methods and apparatus for transparent tone-in-band transmitter, receiver and system processing.


(30) Priority : **12.04.89 GB 8908236**

(43) Date of publication of application : **17.10.90 Bulletin 90/42**

(45) Publication of the grant of the patent : **23.11.94 Bulletin 94/47**

(84) Designated Contracting States : **CH DE ES FR GB IT LI SE**

(56) References cited :
**GB-A- 2 180 112**
**GB-A- 2 187 349**



(73) Proprietor : **BRITISH TECHNOLOGY GROUP LIMITED**
**101 Newington Causeway**
**London SE1 6BU (GB)**

(72) Inventor : **Bateman, Andrew**
**Roseacre,**
**Crowe Hill**
**Limpley Stoke, Bath BA3 6HX (GB)**

(74) Representative : **Hasler, Christopher**
**Patents Department**
**British Technology Group Ltd**
**101 Newington Causeway**
**London SE1 6BU (GB)**



EP 0 392 792 B1



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to methods and apparatus for processing transparent tone-in-band (TTIB) signals in transmitters and receivers.

TTIB systems are described in U.K. Patents Nos. 2163326B, 2161661B, 2168223B, Nos. 2180112 and 2187349.

A problem which may arise in some previously described TTIB systems relates to a control signal which is derived to ensure that when the original baseband spectrum is restored, that is the frequency notch is removed, the frequency and phase relationships in the restored signal are substantially as they were in the original signal from which the signal containing the notch was derived. The control signal is sometimes obtained by correlating those parts of the signal containing the notch which are in the region at the upper and lower borders of the notch and are derived from the same frequency components in the original spectrum. Although there is a strong correlation at an error frequency related to differences in frequency and phase between the portions above and below the notch, there are also significant cross-correlation products which give rise to undesirable frequency and phase jitter in the control signal. This jitter can be minimised by selective filtering of the error frequency component but at the expense of system response time due to delay of the filter used. Filtering is a practical solution for many applications of TTIB but it is not completely satifactory in those applications such as packet data transmission where rapid restoration of the original spectrum is required.

According to a first aspect of the present invention there is provided a receiver processor for processing a received signal derived by a process comprising dividing the spectrum of an original signal at a predetermined frequency and inserting a notch separating upper and lower portions of the received signal, the spectrum of the received signal containing frequency components corresponding to all significant frequency components in the original signal, and first and second border regions of the upper and lower portions, respectively, each containing an overlap frequency component derived from the same frequency component in an overlap frequency band of the original signal which includes the predetermined frequency, when the overlap band contains such a component,

the receiver processor comprising means for

selecting first and second signals from the first and second border regions at a point in processing where the border regions are defined by first and second "roll off" characteristics ($H_{TR+}(f)$ and $H_{TR-}(f)$) for the upper and lower portions, respectively,

the selection of the first and second signals being made using third and fourth "roll off" characteristics ($H_{S-}(f)$ and $H_{S+}(f)$) for the border regions of the upper and lower portions, respectively,

the first and third, and second and fourth, roll off characteristics providing respective composite roll off characteristics ($H_{TR+}(f).H_{S-}(f)$ and $H_{TR-}(f).H_{S+}(f)$) which are each respectively symmetrical about that frequency of the upper and lower portions which was derived from the said predetermined frequency,

deriving a control signal from the first and second signals representative of any difference in frequency and phase of the said overlap component, when present, of the upper and lower portions, and

deriving, using the said control signal, an output signal containing frequency components corresponding to all significant frequency components in the upper and lower portions but having a spectrum in which the notch is removed and the frequency and phase relationships between frequency components of the original signal are substantially restored.

According to a second aspect of the invention there is provided a method of processing a received signal derived by a process comprising dividing the spectrum of an original signal at a predetermined frequency and inserting a notch separating upper and lower portions of the received signal, the spectrum of the received signal containing frequency components corresponding to all significant frequency components in the original signal, and first and second respective border regions of the upper and lower portions, respectively, each containing an overlap frequency component derived from the same frequency component in an overlap frequency band of the original signal which includes the predetermined frequency, when the overlap band contains such a component,

the method comprising the steps of

selecting first and second signals from the first and second border regions at a point in processing where the border regions are defined by first and second "roll off" characteristics ($H_{TR+}(f)$ and $H_{TR-}(f)$) for the upper and lower portions, respectively,

the selection of the first and second signals being made using third and fourth "roll off" characteristics ($H_{S-}(f)$ and $H_{S+}(f)$) for the border regions of the upper and lower portions, respectively,

the first and third, and second and fourth, roll off characteristics providing respective composite roll off characteristics ($H_{TR+}(f).H_{S-}(f)$ and $H_{TR-}(f).H_{S+}(f)$) which are each respectively symmetrical about that frequency of the upper and lower portions which was derived from the said predetermined frequency,

deriving a control signal from the first and second signals representative of any difference in frequency and phase of the said overlap component, when present, of the upper and lower portions, and

deriving, using the said control signal, an output signal containing frequency components corresponding to all significant frequency components in the upper and lower portions but having a spectrum in which the notch is removed and the frequency and phase relationships between frequency components of the original signal are substantially restored.

An important advantage of the invention is that the cross-correlation products, whilst not eliminated, can be made to exhibit substantially perfect symmetry about a desired error frequency component, so that substantially all frequency and phase jitter of the error component cancels out. The control signal is the frequency of the error component and although filtering is usually still required a comparatively broadband low pass filter can be used so that filter time delays are not significant.

The invention may advantageously be considered in relation to a communication system comprising a receiver processor according to the first aspect of the invention and a transmitter processor for generating a transmit signal from which the receive signal is derived, the transmit signal having a frequency spectrum with upper and lower portions separated by a notch and being derived from a baseband signal.

In a receiver processor or method according to the first and second aspects of the invention, the first and second border regions of the upper and lower portions may be adjacent to the notch.

The transmitter processor may include means for frequency translation and transmit filtering of the baseband signal to generate the transmit signal, when the first and second "roll off" characteristics depend on the transmit filtering and the receiver filtering processes.

The transmit filtering may employ mirror filters with responses $H_{1+}(f)$ and $H_{1-}(f)$ in deriving the upper and lower portions respectively. The first receiver filtering processes may then advantageously employ mirror filters also with responses $H_{1+}(f)$ and $H_{1-}(f)$ for the upper and lower portions respectively when the selection of the first and second signals may be made using mirror filters with responses $H_{2-}(f)$ and $H_{2+}(f)$ for the selection of the upper and lower portions respectively. With these responses it is preferable that the following conditions are satisfied:

$$|H_{1+}(f)|^2 = H_{2+}(f), \text{ and}$$
$$|H_{1-}(f)|^2 = H_{2-}(f).$$

According to a third aspect of the present invention there is provided a receiver processor for processing a received signal having a notch in the frequency spectrum thereof, separating upper and lower portions of the receive signal, the said spectrum containing frequency components corresponding to all significant frequency components in an original signal,

and the receiver process comprising means for

deriving a control signal representative of any change in the frequency and phase relationship between the frequency components in the upper and lower portions but as if restored to the frequency range of the original signal, the control signal containing a frequency component with a predetermined frequency related to any such change which is larger than any other frequency components in the control signal, and

deriving, using the said control signal, an output signal containing frequency components corresponding to all significant frequency components in the upper and lower portions but having a spectrum in which the notch is removed and the frequency and phase relationships between frequency components of the original signal are substantially restored.

Certain embodiments of the invention will now be described, by way of example, with reference to the accompanying drawings, in which:-

Figure 1 is a block diagram of a TTIB transmit process,

Figure 2 is a block diagram of a TTIB receive process,

Figures 3(a) to 3(b) are diagrams illustrating the convolution of frequency components carried out in generating a prior art correction signal for the process of Figure 2,

Figures 4(a) to 4(d) are diagrams illustrating a convolution process for use with an embodiment of the present invention in deriving a control signal for the process of Figure 2, and

Figures 5(a) and 5(b) are block diagrams of processes for filtering, normalising and dividing the output of a convolution process derived according to the process illustrated in Figures 4(a) to 4(c).

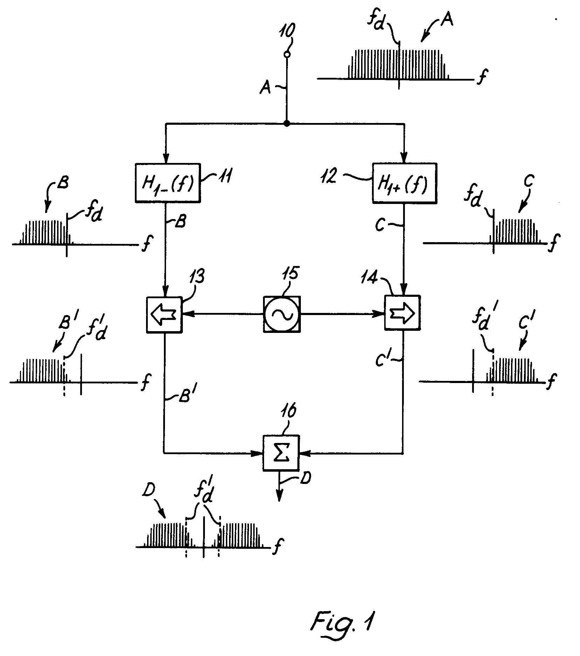

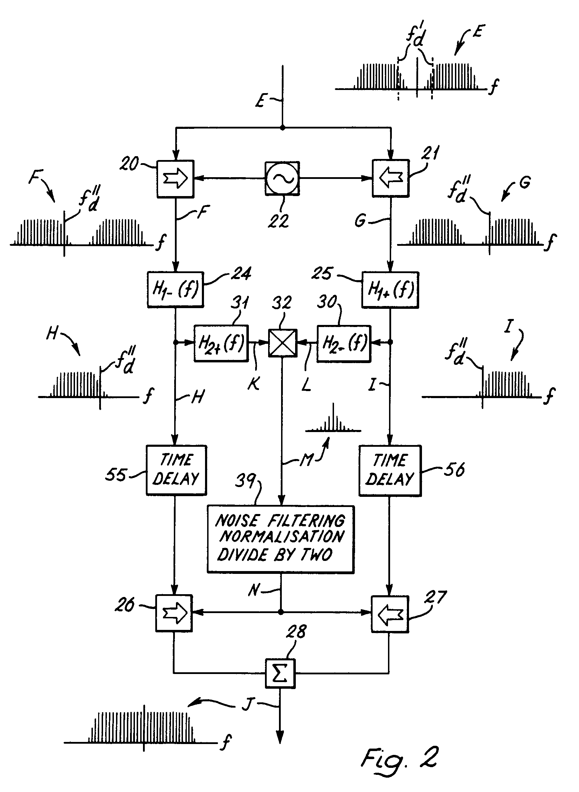

In Figure 1 a baseband signal A is applied to an input terminal of a processing arrangement for use in a transmitter to generate a TTIB signal. In Figures 1 and 2 waveforms whose spectra are illustrated, appear in the circuit at the point where their designation letter is marked. Waveform A in Figure 1 and the other waveforms in Figures 1 and 2 are considered in the complex baseband form, that is they are shown extending, in some cases, into the negative frequency region. See the book "Digital Signal Processing Design" by Andrew Bateman and Warren Yates, published by Pitman, London in 1988. Pages 52 to 55, 301 to 307 and 325 to 331 are of particular interest.

Waveform A is applied to a pair of complex quadrature mirror filters 11 and 12 in which the filter 11 provides in effect lowpass filtering and the filter 12 provides high pass filtering.

The mirror filters 11 and 12 have transfer characteristics $H_{1-}(f)$ and $H_{1+}(f)$, respectively, defined such that

$$|H_{1-}(f)|^2 + |H_{1+}(f)|^2 = 1 \quad (1)$$

and,

$$h_{1+}(n) = (-1)^n h_{1-}(n) \quad (2)$$

where h(n) represents the discrete (sampled) impulse response of H(f). The condition defined by equation (2) makes the two filters symmetrical (i.e. mirrored), with $H_{1+}(f)$ a highpass replica of $H_{1-}(f)$. There is however a region at the high end of the pass band of the filter 11 and the low end of the pass band of the filter 12 where the roll-off of both the filters 11 and 12 allows frequency components at significant levels to pass in the same "overlap" band.

Since the input signal is considered in complex baseband form, then $H_{1-}(f) = H_{1+}(f)$.

The outputs B and C of the filters 11 and 12 are thus

$$B(f) = Y(f).H_1(f) \quad (3)$$

$$C(f) = Y(f).H_{1+}(f) \quad (4)$$

The signal A has now been divided about a frequency $f_d$ and in order to insert the spectral notch which is characteristic of TTIB, the two signals B and C are multipled in multipliers 13 and 14 by quadrature signals from an oscillator 15. The oscillator output signals are represented by $e^{-j\omega t}$ and $e^{j\omega t}$ to give signals B′ and C′ which are summed at 16 to give an output signal D given by

$$D(f) = Y(f).[H_{1-}(f).e^{-j\omega t} + H_{1+}(f).e^{j\omega t}] \quad (5)$$

The spectral gap or "notch width" is equal to 2ω. The position of the notch within the information band Y(f) is determined by the position of Y(f) with respect to the sub-band filters $H_{1-}(f)$ and $H_{1+}(f)$. Two frequency components $f_d'$ are shown in the signals B′ and C′ and also in the signal D, these components having been derived from the frequency $f_d$.

While Figure 1 has been described in terms of filters, multipliers and oscillators it is in practice usually put into operation, as is Figure 2, by digital signal processing (DSP) performed in an integrated circuit processor. Thus the filters, multipliers and oscillator can be regarded as filtering, multiplying and oscillation processes. DSP techniques and filtering, multiplying and oscillation processes are described in the above mentioned book. Suitable processors are given on page 40 and include the TMS 32010 and the TMS 32020. The signal D may in practice be translated into the real baseband and used in ways which are mentioned in the previously mentioned Patents and Applications. In particular a pilot signal is inserted into the notch, conveniently at the summation 16, and used as the pilot signal for a single sideband (SSB) transmitter and receiver system, the pilot signal then being used in the receiver for SSB detection. In an SSB system the baseband is, of course, processed as the input signal to the SSB transmitter circuits. On reception the SSB signal is detected and translated in frequency to baseband using conventional techniques but the pilot signal can be extracted from the notch as convenient, usually immediately before the TTIB receive processing shown in Figure 2. The signal is then fed back and used in the SSB processes of the receiver.

The original baseband spectrum is recovered using the arrangement of Figure 2. The input spectrum E can be written as

$$E(f) = D(f) + N(f) \quad (6)$$

where N(f) represents the additive white Gaussian noise contributed by the channel between the processes of Figures 1 and 2. In practice, the received TTIB signal may also be subject to a common frequency, phase or gain error introduced by the communication channel which is part of the above mentioned channel, such as is caused by multipath fading in a mobile radio system. However it can be shown that these errors do not significantly affect the performance of the TTIB recombination circuitry, and, by implication, the transparency of the TTIB channel.

The purpose of the TTIB receive processing is to remove the notch and restore the two frequency translated sub-bands to their original spectral position. Any frequency or phase error between the transmit and receive translation processes results in mutual interference where the transition regions of the two sub-band filters overlap, in addition to the misalignment of the two sub-bands themselves. Thus, for transparency of the TTIB process, any frequency error must be eliminated and the phase error minimised.

In Figure 2, coarse complementary frequency translation processes 20 and 21 are first performed on the received signal, by multiplication with the complex frequency operators $e^{j(\omega+\delta\omega)t}$ and $e^{-j(\omega+\delta\omega)t}$ from an oscillator 22, where δω represents an arbitrary frequency error between the transmit and receive translation operators. In practice, this frequency error is usually extremely small (<0.05 Hz), as both translation operators are normally derived from a high stability DSP processor clock. The two translated signals F and G are:

$$F(f) = Y(f).H_{1-}(f).e^{+j\delta\omega t} + N(f).e^{+j(\omega + \delta\omega)t} \quad (7)$$

and,

$$G(f) = Y(f).H_{1+}(f).e^{-j\delta\omega t} + N(f).e^{-j(\omega + \delta\omega)t} \quad (8)$$

Next the translated signals are filtered using a pair of mirror filters 24 and 25 which are the same as the filters 11 and 12 of Figure 1.

The filtered partially restored sub-bands are thus given by:

$$H(f) = Y(f).|H_{1-}(f)|^2.e^{+j\delta\omega t} + N(f).H_{1-}(f).e^{+j(\omega + \delta\omega)t} \quad (9)$$

and,

$$I(f) = Y(f).|H_{1+}(f)|^2.e^{-j\delta\omega t} + N(f).H_{1+}(f).e^{-j(\omega + \delta\omega)t} \quad (10)$$

The two filtered signals form the inputs to the sub-band transition correlation process, which generate a frequency/phase estimate $\delta\omega$ for correction of the residual TTIB translation error. The components $f_d'$ are in general separated by $\delta\omega$ from their correct positions and are marked as $f_d''$ in the signals F and G. Due to the noise which accompanies the received signal, the phase estimate will be degraded by phase jitter $\phi(t)$. The final frequency translation operator is thus, $e^{\pm j[\delta\omega t+\phi(t)]}$. After frequency correction by frequency multiplications 26 and 27 using $e^{-j\omega}$ and $e^{j\omega}$, respectively, a summation 28 of the two relocated sub-bands gives the desired receive TTIB output J:

$$J(f) = Y(f).[|H_{1-}(f)|^2 + |H_{1+}(f)|^2] + Y(f).[|H_{1-}(f)|^2.e^{-j\phi(t)} - |H_{1+}(f)|^2.e^{+j\phi(t)}] + N'(f) \quad (11)$$

where the noise term N′(f) is given by

$$N'(f) = N(f).H_{1-}(f).e^{+j[\phi(t) + \omega t]} + N(f).H_{1+}(f).e^{-j[\phi(t) + \omega t]} \quad (12)$$

By virtue of the filters $H_{1+}(f)$ and $H_{1-}(f)$ being power complementary, and since the two filtered noise terms in the above equation are uncorrelated, the spectral density of the output noise component is identical to that of the input noise signal N(f).

It can be shown that if the noise bandwidth of the sub-band correlation process is made arbitrarily small, then the phase jitter term $\phi(t)$ in the final translation operator can be ignored. For this case, the TTIB output signal becomes,

$$J(f) = Y(f).[|H_{1-}(f)|^2 + |H_{1+}(f)|^2] + N'(f)$$
$$= Y(f) + N'(f) \quad (13)$$

which is the desired message waveform Y(f) plus the channel induced noise. The combined transmit/receive TTIB process is thus truly transparent to the message signal, provided that a portion of the energy of Y(f) occasionally falls within the transition region of the sub-band filters $H_{1+}(f)$ and $H_{1-}(f)$ to allow periodic updating of the error frequency/phase estimate $\delta\omega$. For almost all message signals encountered in practice, ranging from analogue speech through to digitally modulated waveforms such as MSK and M-ary QAM, this condition is easily satisfied.

Any signal components falling within the transition region of filter $H_{1+}(f)$ will correlate with components falling within the transition region of filter $H_{1-}(f)$ since both sets of components are derived from a common portion (the overlap band) of spectrum source within the message signal Y(f). It is this correlation property between the two sub-bands which provides the phase error estimate for correct sub-band recombination. In the unlikely case that no components of Y(f) fall within the filter transition region, then a deterministic component can be added for correlation purposes, which is later removed in the receive processing. Addition of a separate component requires power and also reduces the transparency of the system making it an undesirable option. Fortunately, for most message signals Y(f), and certainly FFSK, BPSK, QPSK and 16-QAM, sufficient energy is present within the transition region to allow substantially perfect recombination without recourse to the addition of a separate correlation term.

Filters 30 and 31 with responses $H_{2-}(f)$ and $H_{2+}(f)$ select the common spectral components of the two sub-bands falling within the sub-band overlap region. Ignoring channel noise, the outputs K and L of these filters are given by:

$$K(f) = Y(f).|H_{1-}(f)|^2.H_{2+}(f).e^{+j\delta\omega t} \quad (14)$$

and

$$L(f) = Y(f).|H_{1+}(f)|^2.H_{2-}(f).e^{-j\delta\omega t} \quad (15)$$

The signals K and L contain the components $f_d''$.

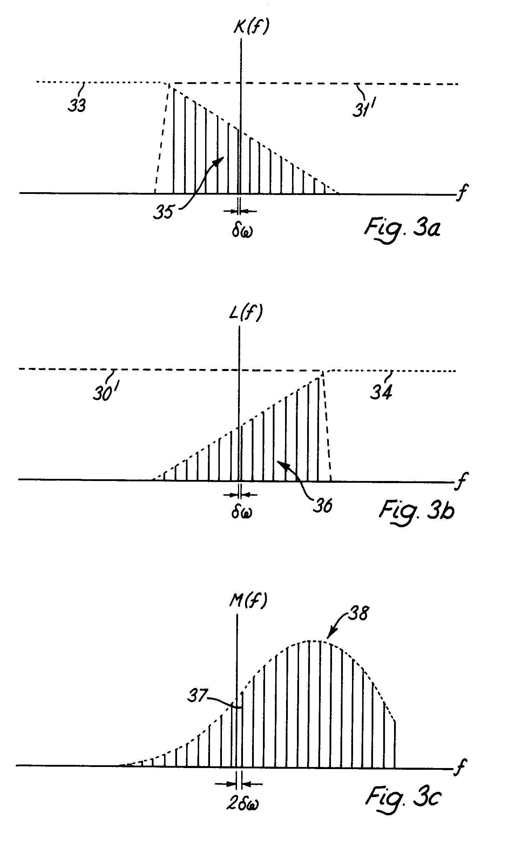

To obtain a frequency/phase error estimate, these two signals are multiplied together, and the difference term retained in an operaton 32. Since multiplication in the time domain implies convolution in the frequency domain, the frequency domain response can be derived graphically as in Figures 3(a) to 3(c).

The deviation of the frequency at the centre of the notch from its correct position is shown by the frequency difference $d\omega$ in Figures 3(a) and 3(b).

The characteristics 30′ and 31′ of the filters 30 and 31, respectively, are as shown in Figures 3(a) and 3(b) and are defined as "brick wall" filters. The effect of the filters 11 and 24 is shown as the characteristic 33 and the spectrum passed is indicated at 35 by spectral lines where the characteristics 31′ and 33 overlap. Similarly in Figure 3(b) the region 36 indicates the spectral region passed by the characteristics 30′ and 34. Thus the areas 35 and 36 represent the spectrum of the signals K and L, if the power spectral density Y(f) of the message signal is assumed flat across the transition band and, for simplicity, the gain response of the composite filters 11 and 24, and 12 and 25 is made to exhibit a linear roll-off within the transition band.

Filter characteristics of this type give rise to the problem illustrated by Figure 3(c) where convolution of the regions 35 and 36 is illustrated. Figure 3(c) shows that whilst there is a strong correlation component 37 at twice the error frequency $\delta\omega$, there are also significant cross-correlation products in the region 38 which give rise to undesirable frequency and phase jitter of the wanted error term. This jitter can be minimised by selective filtering of the error frequency component, but at the expense of system response time due to time delay of the filter. Whilst such selective filtering is a practical solution for many applications of TTIB, it is far from satisfactory in those applications such as packet data transmission, where rapid sub-band recombination is required.

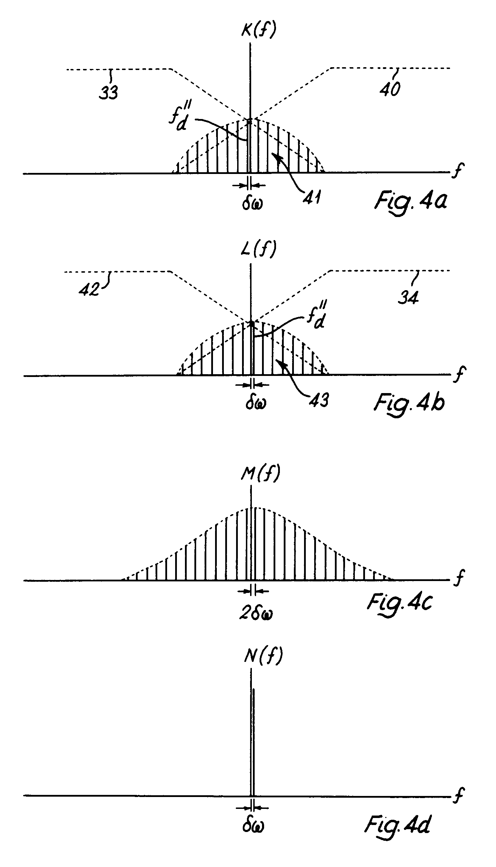

According to one embodiment of the present invention, by suitable choice of filter response for the filters 30 and 31, the cross-correlation products, whilst not eliminated, can be made to exhibit substantially perfect symmetry about the desired error frequency components $f_d''$ derived ultimately from the frequency $f_d$, so that all frequency and phase jitter of the error component cancels out, as indicated by Figures 4(a) to 4(d). The resultant signal can in effect be viewed as a full carrier AM waveform, which after amplitude normalisation provides the desired undistorted error frequency component, $2\delta\omega$.

To achieve symmetry of the cross-correlation products, the spectra of the components within the two sub-band transition regions are made identical apart from the common frequency shift $\delta\omega$. For this to be true, the transfer functions of the filters 30 and 31 satisfy the following relationships:

$$H_{2-}(f) = |H_{1-}(f)|^2 \quad (16)$$

$$H_{2+}(f) = |H_{1+}(f)|^2 \quad (17)$$

which ensures that equations (14) and (15) are identical apart from the frequency translation error $\pm\delta\omega$.

In Figure 4(a) the composite response of the filters 11 and 24 is again designated 33 while the response of the filter 31 as defined in equation (17) is designated 40. As a result of the equation 17, the composite roll-off of the filters 11 and 24 is symmetrical with the roll-off of the filter 31 about the vertical axis of Figure 4(a) which corresponds to a frequency derived from the frequency $f_d$. The resultant spectral content of the overlap region is indicated by the spectral lines in the region 41. Similarly in Figure 4(b) the composite response of the filters 12 and 25 is indicated at 34 while the response of the filter 30 as defined in equation (16) is indicated at 42. Again, the composite roll-off of the filters 12 and 25 is symmetrical with the roll-off of the filter 30 about the vertical axis of Figure 4(b) which also corresponds to a frequency derived from the frequency $f_d$. The resulting spectral region captured by the two filters is indicated at 43. On multiplying the outputs of the filters 30 and 31 together in the operation 32 to correlate the outputs from the filters 30 and 31 the signal M is obtained whose spectral content is shown in Figure 4(c) and which peaks at the frequency $2\delta\omega$, that is at twice the deviation of the nominal central frequency in the notch from the centre of the notch.

Thus Figure 4(c) illustrates the spectrum produced by the convolution process carried out by the operation 32. On noise filtering, normalisation and frequency division by two (operation 39) the signal N is obtained (with the single spectral line shown in Figure 4(d)) and this is the signal required for the frequency translation processes 26 and 27 to give a frequency/phase error-free resultant spectrum J after the summation 28. When the above mentioned symmetry condition of equations (16) and (17) is satisfied, the time domain representation of the outputs of filters 30 and 31 can be written respectively as:

$$K(f) = \sum_n a_n . e^{\pm j(\omega_n t + \delta\omega t)} \quad (18)$$

and

$$L(f) = \sum_m a_m . e^{\pm j(\omega_m t - \delta\omega t)} \quad (19)$$

or, expressed as a composite signal, as:

$$K(f) = a(t).e^{\pm j[\delta\omega t + \alpha(t)]} \quad (20)$$

and

$$L(f) = a(t).e^{\pm[-\delta\omega t + \alpha(t)]} \quad (21)$$

where a(t) and α(t) are the resultant time varying amplitude and phase.

The difference product of these two waveforms represents the desired correlator output, M(f), where:

$$M(f) = a^2(t).e^{\pm j2\delta\omega t} \quad (22)$$

This signal can be viewed as a full carrier AM waveform [$a^2(t)$ always greater than zero], which after normalisation and frequency division yields the desired frequency correction operator:

$$N(f) = e^{\pm j\delta\omega t} \quad (23)$$

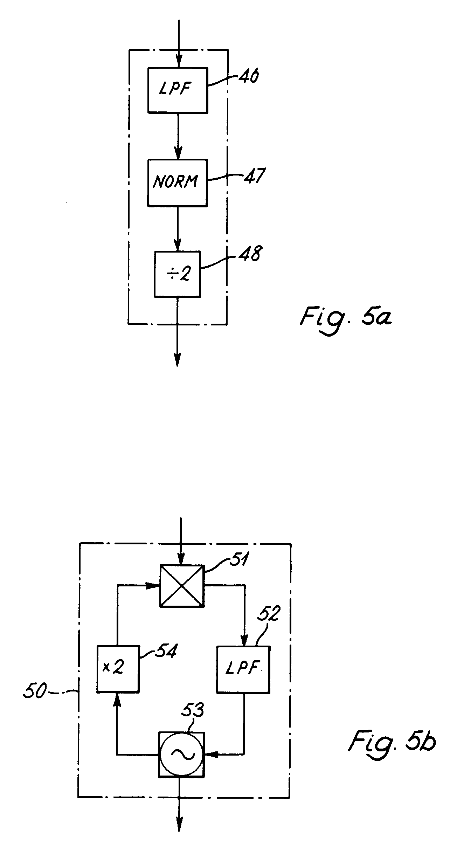

Two methods for error signal normalisation and subsequent frequency/phase division for the operation 39 are shown in Figures 5(a) and 5(b). One involves discrete amplitude normalisation followed by phase division, the other employs a phase locked loop (PLL) arrangement.

In Figure 5(a), after low pass filtering 46, the envelope of the error signal waveform from the operation 32 is derived using DSP techniques by squaring and addition of the two quadrature error terms, yielding the squared envelope term $a^2(t)$. A look-up table provides the conversion from $a^2(t)$ to $1/a^2(t)$ which when multiplied with the error term (operation 47) gives the normalised output $e^{\pm j2\delta\omega t}$. A frequency division-by-two operation 48 provides the correction term $e^{\pm j\delta\omega t}$ and is implemented using a second look-up table. The necessity for frequency division introduces a 180° phase ambiguity into the final TTIB correction term, which in turn introduces a potential 180° phase reversal (or inversion) of the TTIB output signal. In most applications of TTIB, such as analogue speech transmission with inland signalling, this phase ambiguity is irrelevant and can be ignored. For TTIB-based coherent data systems however, the ambiguity can be catered for by known techniques such as differential encoding of the data stream, or by using a known preamble data sequence or valid data words to detect phase inversion, for example.

In Figure 5(b), an alternative way of implementing the operation 39, a PLL 50 includes a loop phase detector 51 receiving an input from the operation 32 and with output processed by a loop filter 52 to provide the control signal at δω for a voltage controlled oscillator (VCO) 53. Amplitude normalisation is performed automatically within the PLL 50 since the VCO always gives a constant level output. Frequency division is accomplished by passing another input signal at 2δω to the loop phase detector 51 from a frequency multiply-by-two operation 54 between the oscillator 53 (with output at δω) and the phase detector.

Using a PLL arrangement for normalisation has two distinct advantages over the first method described. Firstly, if the input to the PLL is removed, a phase/frequency correction signal is still available from the VCO, whereas it will vanish with the discrete normalisation system. By clamping the VCO drive when the input disappears, (that is if there are no components falling within the sub-band transition region, or if the received signal is subject to severe multipath fading), a very accurate phase and frequency estimate can be maintained over several minutes, until a suitable correlation signal re-appears. The second advantage of using the PLL is that the phase ambiguity, whilst still present with the PLL implementation, can be more easily compensated for than with the direct method.

A fast sub-band recombination process for TTIB is crucial for applications such as packet data transmission, where the overheads of, for example, carrier synchronisation, symbol synchronisation and TTIB sub-band locking become imporant. With the direct normalisation method, the time delay associated with frequency error estimation is simply the time delay associated with the filters 24 and 25 and the error frequency lowpass filter 46. The inclusion of a lowpass filter serves to minimise channel noise induced phase jitter of the error frequency estimate. During the initial sub-band recombination phase, this filter may be bypassed to reduce the recombination delay time. Once the frequency error estimate has been established, the filter 46 may be switched in, and may be a very narrow lowpass filter, since the frequency error is typically less than 0.05 Hz, so that negligible phase jitter due to channel noise is experienced.

FIR techniques may be used to implement the filters 30 and 31, then the delay introduced can be offset by identical delays 55 and 56 in the signal path (see Figure 2) and no data need be lost during the sub-band recombination period. Only, when absolute delay in the received signal path is of significance, does the delay of filters 30 and 31 become important. A typical value of absolute delay for these filters, assuming a transition width of 100 Hz, is 3 ms.

For the PLL normalisation system, the acquisition time of the loop must also be taken into account. For initial synchronisation purposes, the loop bandwidth and loop gain can be made very large, so that rapid loop acquisition can be achieved, (less than 100 μs). Once synchronised, the loop gain, and hence bandwidth, can be made extremely small, (due to the precise knowledge of the sub-band separation frequency), so that the loop tracking error due to channel noise falling within the correlation bandwidth can again be minimised.

Although embodiments of the invention have been specifically described in relation to complex baseband form, it will be realised that the invention can be put into practice in many other ways including those employing the real baseband form, for example as described in U.K. Patents 2161661B and 2163326B, and U.K. Patent No. 2180112.

The notch and the upper and lower portions of the spectrum may be derived in ways which place the frequency $f_d'$, derived from the frequency $f_d$, in other positions in the portions; for example the frequency $f_d'$ may be in the lower border regions of both upper and lower portions, in the upper border regions of both portions, or in the upper border region of one portion and the lower border region of the other portion. The invention can be used in any of these circumstances if the appropriate filter "roll off" characteristics are provided.

## Claims

1. A receiver processor for processing a received signal (E) derived by a process comprising dividing the spectrum of an original signal (A) at a predetermined frequency (fd) and inserting a notch separating upper and lower portions of the received signal (E), the spectrum of the received signal (E) containing frequency components corresponding to all significant frequency components in the original signal (A), and first and second border regions of the upper and lower portions, respectively, each containing an overlap frequency component (fd′) derived from the same frequency component (fd) in an overlap frequency band of the original signal which includes the predetermined frequency (fd), when the overlap band contains such a component,

   the receiver processor comprising means for

   selecting first and second signals (K,L) from the first and second border regions at a point in processing where the border regions are defined by first and second "roll off" characteristics ($H_{TR+}(f)$ and $H_{TR-}(f)$) for the upper and lower portions, respectively,

   the selection of the first and second signals (K,L) being made using third and fourth "roll off" characteristics ($H_{S-}(f)$ and $H_{S+}(f)$) for the border regions of the upper and lower portions, respectively,

   deriving a control signal (N) from the first and second signals (K,L) representative of any difference in frequency and phase of the said overlap component, when present, of the upper and lower portions, and

   deriving, using the said control signal (N), an output signal (J) containing frequency components corresponding to all significant frequency components in the upper and lower portions but having a spectrum in which the notch is removed and the frequency and phase relationships between frequency components of the original signal are substantially restored,

   characterised in that the first and third, and second and fourth, roll off characteristics provide respective composite roll off characteristics ($H_{TR+}(f).H_{S-}(f)$ and $H_{TR-}(f).H_{S+}(f)$) which are each respectively symmetrical about that frequency (fd′) of the upper and lower portions which was derived from the said predetermined frequency. (fd).

2. A method of processing a received signal (E) derived by a process comprising dividing the spectrum of an original signal (A) at a predetermined frequency (fd) and inserting a notch separating upper and lower portions of the received signal (E), the spectrum of the received signal (E) containing frequency components corresponding to all significant frequency components in the original signal (A), and first and second respective border regions of the upper and lower portions, respectively, each containing an overlap frequency component (fd′) derived from the same frequency component (fd) in an overlap frequency band of the original signal which includes the predetermined frequency (fd), when the overlap band contains such a component,

   the method comprising the steps of

   selecting first and second signals (K,L) from the first and second border regions at a point in processing where the border regions are defined by first and second "roll off" characteristics ($H_{TR+}(f)$ and $H_{TR-}(f)$) for the upper and lower portions, respectively,

   the selection of the first and second signals (K,L) being made using third and fourth "roll off" characteristics ($H_{S-}(f)$ and $H_{S+}(f)$) for the border regions of the upper and lower portions, respectively,

   deriving a control signal (N) from the first and second signals representative of any difference in frequency and phase of the said overlap component, when present, of the upper and lower portions, and

   deriving, using the said control signal (N), an output signal (J) containing frequency components corresponding to all significant frequency components in the upper and lower portions but having a spectrum in which the notch is removed and the frequency and phase relationships between frequency components of the original signal are substantially restored,

   characterised in that the first and third, and second and fourth, roll off characteristics provide respective composite roll off characteristics ($H_{TR+}(f).H_{S-}(f)$ and $H_{TR-}(f).H_{S+}(f)$) which are each respectively symmetrical about that frequency (fd') of the upper and lower portions which was derived from the said predetermined frequency (fd).

3. A receiver processor or method according to Claim 1 or 2 characterised in that the first and second border regions of the upper and lower portions are adjacent to the notch.

4. A receiver processor or method according to Claim 1, 2 or 3 characterised in that the first and second signals (K,L) are correlated in deriving the control signal.

5. A receiver processor or method according to Claim 4 characterised in that the resultant signal (M) after correlation is low-pass filtered (46) and normalised (47) and then divided in frequency (48) to bring it to a suitable frequency for use as the control signal (N) in demodulating signals derived from the upper and lower portions to provide the said output signal.

6. A receiver processor or method according to Claim 5 characterised in that the normalisation, low-pass filtering and frequency division are carried out by means of a phase locked loop (50) in which the resultant signal (M), and the control signal (N) after frequency multiplication (54) by two, are multiplied together (51) and the result is low-pass filtered (52) and applied to control the frequency of an oscillatior (53) generating the control signal (N).

7. A receiver processor or method according to Claim 1, or any of Claims 3 to 6 insofar as dependent on Claim 1, characterised in that

two frequency translation stages are used in deriving the said output signal (J), the first stage (20,21) employs a fixed-frequency oscillation (22) in carrying out frequency translation by frequency multiplying at least one of the said portions, and the second stage (26,27) employs the control signal (N) in carrying out further frequency translation by frequency multiplying signals derived from the first stage (20,21),

the signals (F,G) from the first stage are filtered by first receiver filtering processes to remove unwanted sideband signals before application to the second stage, and

the signals (H,I) from the first receiver filtering processes are filtered by selection filter processes (30,31) having the said third and fourth roll off characteristics to generate the first and second signals (K,L).

8. A communication system comprising a receiver processor according to any preceding claim in sofar as dependent on Claim 1 and a transmitter processor for generating a transmit signal from which the received signal is derived, characterised in that the transmit signal (D) is derived from an original signal (A) and has a frequency spectrum with upper and lower portions separated by a notch.

9. A communication system according to Claim 8 insofar as dependent on Claim 7, characterised in that the transmitter processor includes means (13,14,15) for frequency translation, and transmit filtering (11,12), of the baseband signal to generate the transmit signal, and

the first and second roll off characteristics depend on the transmit filtering and the first receiver filtering processes.

10. A communication system according to Claim 9 characterised in that the transmit filtering employs mirror filters with responses $H_{1+}(f)$ and $H_{1-}(f)$ in deriving the upper and lower portions, respectively,

the first receiver filtering processes employ mirror filters also with responses $H_{1+}(f)$ and $H_{1-}(f)$ for the upper and lower portions respectively,

the selection of the first and second signals is made using mirror filters with responses $H_{2-}(f)$ and $H_{2+}(f)$ for selection from the upper and lower portions, respectively, and

the following conditions are satisfied

$$|H_{1+}(f)|^2 = H_{2+}(f), \text{ and}$$
$$|H_{1-}(f)|^2 = H_{2-}(f).$$

**Patentansprüche**

1. Empfängerprozessor zum Verarbeiten eines empfangenen Signals (E), das durch einen Prozeß abgeleitet ist, der das Teilen des Spektrums eines Ursprungssignals (A) bei einer vorbestimmten Frequenz (fd) und das Einfügen eines den oberen und unteren Teil des empfangenen Signals (E) trennenden Einschnitts umfaßt, wobei das Spektrum des empfangenen Signals (E) Frequenzkomponenten enthält, die allen signifikanten Frequenzkomponenten in dem Ursprungssignal (A) entsprechen, und einen ersten und zweiten Randbereich des oberen bzw. unteren Teils, von denen jeder eine Überlappungsfrequenzkomponente (fd′) enthält, die von der gleichen Frequenzkomponente (fd) in einem Überlappungsfrequenzband des Ursprungssignals abgeleitet ist, welches die vorbestimmte Frequenz (fd) aufweist, wenn das Überlappungsband eine solche Komponente enthält,

   der Empfängerprozessor umfaßt Mittel zum

   Selektieren eines ersten und zweiten Signals (K, L) aus dem ersten und zweiten Randbereich an einer Stelle in der Verarbeitung, wo die Randbereiche durch eine erste und zweite "Abroll"-Charakteristik ($H_{TR+}$(f) und $H_{TR-}$ (f)) für den oberen bzw. unteren Teil definiert werden bzw. sind,

   wobei die Selektion des ersten und zweiten Signals (K, L) unter Verwendung einer dritten und vierten "Abroll"-Charakteristik ($H_{S-}$ (f) und $H_{S+}$(f)) für die Randbereiche des oberen bzw. unteren Teils erzielt wird,

   Ableiten eines Steuersignals (N) von dem ersten und zweiten Signal (K, L), das für irgendeine Differenz in der Frequenz und Phase der Überlappungskomponente, wenn sie vorhanden ist, des oberen und unteren Teils repräsentativ ist, und

   Ableiten, unter Verwendung des Steuersignals (N), eines Ausgangssignals (J), das Frequenzkomponenten enthält, die allen signifikanten Frequenzkomponenten in dem oberen und unteren Teil entsprechen, aber ein Spektrum haben, in welchem der Einschnitt entfernt ist und die Frequenz- und Phasenbeziehungen zwischen den Frequenzkomponenten des Ursprungssignals im wesentlichen wiederhergestellt sind,

   dadurch **gekennzeichnet,** daß die erste und dritte sowie die zweite und vierte Abroll-Charakteristik jeweilige zusammengesetzte Abroll-Charakteristika ($H_{TR+}$(f) $\cdot H_{S-}$ (f) und $H_{TR-}$ (f) $\cdot H_{S+}$(f)) vorsehen, die jede jeweils symmetrisch um jene Frequenz (fd) des oberen und unteren Teils sind, welche von der vorbestimmten Frequenz (fd) abgeleitet wurde.

2. Verfahren zum Verarbeiten eines empfangenen Signals (E), das durch einen Prozeß abgeleitet ist, der das Teilen des Spektrums eines Ursprungssignals (A) bei einer vorbestimmten Frequenz (fd) und das Einfügen eines den oberen und unteren Teil des empfangenen Signals (E) trennenden Einschnitts umfaßt, wobei das Spektrum des empfangenen Signals (E) Frequenzkomponenten enthält, die allen signifikanten Frequenzkomponenten in dem Ursprungssignal (A) entsprechen, und einen ersten und zweiten jeweiligen Randbereich des oberen bzw. unteren Teils, wobei jeder eine Überlappungsfrequenzkomponente (fd′) enthält, die von der gleichen Frequenzkomponente (fd) in einem Überlappungsfrequenzband des Ursprungssignals abgeleitet ist, welches die vorbestimmte Frequenz (fd) aufweist, wenn das Überlappungsband eine solche Komponente enthält,

   das Verfahren umfaßt die Schritte des

   Selektierens eines ersten und zweiten Signals (K, L) von dem ersten und zweiten Randbereich an einer Stelle in der Verarbeitung, wo die Randbereiche durch eine erste und zweite "Abroll"-Charakteristik ($H_{TR+}$(f) und $H_{TR-}$ (f)) für den oberen bzw. unteren Teil definiert werden bzw. sind,

   wobei die Selektion des ersten und zweiten Signals (K, L) unter Verwendung einer dritten und vierten "Abroll"-Charakteristik ($H_{S-}$ (f) und $H_{S+}$(f)) für die Randbereiche des oberen bzw. unteren Teils erzielt wird,

   Ableitens eines Steuersignals (N) von dem ersten und zweiten Signal, das repräsentativ für irgendeine Differenz in der Frequenz und Phase der Überlappungskomponente, wenn vorhanden, des oberen und unteren Teils ist, und

   Ableitens, unter Verwendung des Steuersignals (N), eines Ausgangssignals (J), das Frequenzkomponenten enthält, die allen signifikanten Frequenzkomponenten in dem oberen und unteren Teil entsprechen, aber ein Spektrum hat, in welchem der Einschnitt entfernt ist und die Frequenz- und Phasenbeziehungen zwischen den Frequenzkomponenten des Ursprungssignals im wesentlichen wiederhergestellt sind,

   dadurch **gekennzeichnet,** daß die erste und dritte sowie die zweite und vierte Abroll-Charakteristik jeweilige zusammengesetzte Abroll-Charakteristika ($H_{TR+}$(f) $\cdot H_{S-}$ (f) und $H_{TR-}$ (f)$\cdot H_{S+}$(f)) vorsehen, welche jede jeweils symmetrisch um jene Frequenz (fd′) des oberen und unteren Teils sind, die von der vorbestimmten Frequenz (fd) abgeleitet wurde.

3. Empfängerprozessor oder Verfahren gemäß Anspruch 1 oder 2, dadurch **gekennzeichnet,** daß der erste und zweite Randbereich des oberen und unteren Teils benachbart dem Einschnitt sind.

4. Empfängerprozessor oder Verfahren gemäß Anspruch 1, 2 oder 3, dadurch **gekennzeichnet,** daß das erste und zweite Signal (K, L) beim Ableiten des Steuersignals korreliert werden.

5. Empfängerprozessor oder Verfahren gemäß Anspruch 4, dadurch **gekennzeichnet,** daß das resultierende Signal (M) nach der Korrelation tiefpaßgefiltert (46) und normalisiert (47) und dann in der Frequenz geteilt (48) wird, um es auf eine geeignete Frequenz für die Verwendung als das Steuersignal (N) beim Demodulieren von Signalen zu bringen, die von dem oberen und unteren Teil abgeleitet werden bzw. sind, um das Ausgangssignal zu liefern.

6. Empfängerprozessor oder Verfahren gemäß Anspruch 5, dadurch **gekennzeichnet,** daß die Normalisierung, Tiefpaßfilterung und Frequenzteilung mittels einer Phasenregalschleife bzw. phasenstarren Schleife (50) ausgeführt werden, in welcher das resultierende Signal (M) und das Steuersignal (N), nach der Frequenzmultiplikation (54) mit zwei, miteinander multipliziert (51) werden und das Ergebnis tiefpaßgefiltert (52) und angewandt wird, um die Frequenz eines Oszillators (53) zu steuern, der das Steuersignal (N) erzeugt.

7. Empfängerprozessor oder Verfahren gemäß Anspruch 1 oder irgendeinem der Ansprüche 3 bis 6, insoweit sie vom Anspruch 1 abhängen, dadurch **gekennzeichnet,** daß

zwei Frequenzverschiebungsstufen beim Ableiten des Ausgangssignals (J) verwendet werden, wobei die erste Stufe (20, 21) eine Oszillation (22) fester Frequenz beim Ausführen der Frequenzverschiebung durch Frequenzvervielfachung in wenigstens einem der Teile verwendet, und die zweite Stufe (26, 27) das Steuersignal (N) beim Ausführen einer weiteren Frequenzverschiebung durch Frequenzvervielfachungssignale, die von der ersten Stufe (20, 21) abgeleitet sind, verwendet,

die Signale (F, G) von der ersten Stufe durch einen ersten Empfängerfilterungsprozeß zum Entfernen von unerwünschten Seitenbandsignalen vor der Anwendung auf die zweite Stufe gefiltert werden, und

die Signale (H, I) von dem ersten Empfängerfilterungsprozeß durch Selektionsfilterprozesse (30, 31) gefiltert werden, welche die dritte und vierte Abroll-Charakteristik haben, um das erste und zweite Signal (K, L) zu erzeugen.

8. Übertragungssystem, umfassend einen Empfängerprozessor gemäß irgendeinem vorhergehenden Anspruch, insoweit als er vom Anspruch 1 abhängt, und einen Senderprozessor zum Erzeugen eines Sendesignals, von welchem das empfangene Signal abgeleitet wird, dadurch **gekennzeichnet,** daß das Sendesignal (D) von einem Ursprungssignal (A) abgeleitet wird und ein Frequenzspektrum hat, bei dem ein oberer und unterer Teil durch einen Einschnitt getrennt sind.

9. Übertragunssystem gemäß Anspruch 8, insoweit als er vom Anspruch 7 abhängt, dadurch **gekennzeichnet,** daß der Senderprozessor Mittel (13, 14, 15) zur Frequenzverschiebung und Sendefilterung (11, 12) des Basisbandsignals zum Erzeugen des Sendesignals aufweist, und

die erste und zweite Abroll-Charakteristik von dem Sendefilterungs- und dem ersten Empfängerfilterungsprozeß abhängen.

10. Übertragungssystem gemäß Anspruch 9, dadurch **gekennzeichnet,** daß die Sendefilterung Spiegelfilter mit Filterkurven $H_{1+}(f)$ und $H_{1-}(f)$ beim Ableiten des oberen bzw. unteren Teils verwendet,

wobei die ersten Empfängerfilterungsprozesse Spiegelfilter auch mit Filterkurven $H_{1+}(f)$ und $H_{1-}(f)$ für den oberen bzw. unteren Teil verwenden,

wobei die Selektion des ersten und zweiten Signals unter Verwendung von Spiegelfiltern mit Filterkurven $H_{2-}(f)$ und $H_{2+}(f)$ für die Selektion von dem oberen bzw. unteren Teil erzielt wird und die folgenden Bedingungen erfüllt sind

$$|H_{1+}(f)|^2 = H_{2+}(f), \text{ und}$$
$$|H_{1-}(f)|^2 = H_{2-}(f).$$

## Revendications

1. Processeur de récepteur servant à traiter un signal reçu (E) dérivé par un processus consistant à diviser le spectre d'un signal original (A) à une fréquence prédéterminée (fd) et à insérer une encoche séparant des parties supérieure et inférieure du signal reçu (E), le spectre du signal reçu (E) contenant des composantes de fréquences correspondant à toutes les composantes de fréquences importantes dans le signal original (A), et respectivement des première et seconde régions limites des parties supérieure et inférieure, **contenant** chacune une composante de fréquence de chevauchement (fd') dérivée de la même composante de fréquence (fd) dans une bande de fréquences de chevauchement du signal original, qui inclut la fréquence prédéterminée (fd), lorsque la bande de chevauchement contient une telle composante,

   le processeur de récepteur comprenant des moyens pour

   sélectionner des premier et second signaux (K,L) provenant des première et seconde régions limites en un point du traitement, où les régions limites sont définies par des première et seconde caractéristiques "de coupure" ($H_{TR+}$(f) et ($H_{TR-}$(f)) respectivement pour les parties supérieure et inférieure,

   la sélection des premier et second signaux (K, L) étant effectuée en utilisant des troisième et quatrième caractéristiques "de coupure" ($H_{S-}$(f) et $H_{S+}$(f)) pour les régions limites respectivement des parties supérieure et inférieure,

   dériver un signal de commande (N) à partir des premier et second signaux (K,L) représentatifs d'une différence de fréquence et de phase de ladite composante de chevauchement, lorsqu'elle est présente, des parties supérieure et inférieure, et

   dériver, en utilisant ledit signal de commande (N), un signal de sortie (J) contenant des composantes de fréquences correspondant à toutes les composantes de fréquences importantes dans les parties supérieure et inférieure, mais possédant un spectre, dans lequel l'encoche est retirée, et les relations de fréquence et de phase entre les composantes de fréquences du signal original sont sensiblement rétablies,

   caractérisé en ce que les première et troisième caractéristiques de coupure et les seconde et quatrième caractéristiques de coupure fournissent des caractéristiques de coupure composites respectives ($H_{TR+}$(f).$H_{S-}$(f) et $H_{TR-}$(f).$H_{S+}$(f)), qui sont respectivement symétriques par rapport à la fréquence (fd) des parties supérieure et inférieure, qui a été dérivée de ladite fréquence prédéterminée (fd).

2. Procédé de traitement d'un signal reçu (E) dérivé par un processus consistant à diviser le spectre d'un signal original (A) à une fréquence prédéterminée (fd) et à insérer une encoche séparant des parties supérieure et inférieure du signal reçu (E), le spectre du signal reçu (E) contenant des composantes de fréquences correspondant à toutes les composantes de fréquences importantes dans le signal original (A), et respectivement des première et seconde régions limites des parties supérieure et inférieure, des régions contenant chacune une composante de fréquence de chevauchement (fd') dérivée de la même composante de fréquence (fd) dans une bande de fréquences de chevauchement du signal original, qui inclut la fréquence prédéterminée (fd), lorsque la bande de chevauchement contient une telle composante,

   le procédé comprenant les étapes consistant à

   sélectionner des premier et second signaux (K,L) provenant des première et seconde régions limites en un point du traitement où les régions limites sont définies par des première et seconde caractéristiques "de coupure" ($H_{TR+}$(f) et ($H_{TR-}$(f)) respectivement pour les parties supérieure et inférieure,

   la sélection des premier et second signaux (K, L) étant effectuée en utilisant des troisième et quatrième caractéristiques "de coupure" ($H_{S-}$(f) et $H_{S+}$(f)) pour les régions limites respectivement des parties supérieure et inférieure,

   dériver un signal de commande (N) à partir des premier et second signaux (K,L) représentatifs d'une différence de fréquence et de phase de ladite composante de chevauchement, lorsqu'elle est présente, des parties supérieure et inférieure, et

   dériver, en utilisant ledit signal de commande (N), un signal de sortie (J) contenant des composantes de fréquences correspondant à toutes les composantes de fréquences importantes dans les parties supérieure et inférieure, mais possédant un spectre, dans lequel l'encoche est retirée, et les relations de fréquence et de phase entre les composantes de fréquences du signal original sont sensiblement rétablies,

   caractérisé en ce que les première et troisième caractéristiques de coupure et les seconde et quatrième caractéristiques de coupure fournissent des caractéristiques de coupure composites respectives ($H_{TR+}$(f).$H_{S-}$(f) et $H_{TR-}$(f).$H_{S+}$(f)), qui sont respectivement symétriques par rapport à la fréquence (fd) des parties supérieures et inférieures, qui a été dérivée de ladite fréquence prédéterminée (fd).

3. Processeur de réception ou procédé selon la revendication 1 ou 2, caractérisé en ce que les première et seconde régions limites des parties supérieure et inférieure sont adjacentes à l'encoche.

4. Processeur de réception ou procédé selon la revendication 1, 2 ou 3, caractérisé en ce que les premier et second signaux (K, L) sont corrélés pour l'obtention du signal de commande.

5. Processeur de réception ou procédé selon la revendication 4, caractérisé en ce qu'après une corrélation, le signal résultant (M) est filtré selon un filtrage passe-bas (46) et est normalisé (47), puis est divisé en fréquence (48) de manière à posséder une fréquence appropriée pour son utilisation en tant que signal de commande (N) pour la démodulation de signaux dérivés des parties supérieure et inférieure pour l'obtention dudit signal de sortie.

6. Processeur de réception ou procédé selon la revendication 5, caractérisé en ce que la normalisation, le filtrage passe-bas et la division de fréquence sont exécutés au moyen d'une boucle à verrouillage de phase (50), dans lequelle le signal résultant (M) et le signal de commande (N) sont multipliés ensemble (51), après la multiplication de fréquence (54) par deux, et le résultat est soumis à un filtrage passe-bas (52) et est appliqué à la commande de la fréquence d'un oscillateur (53) produisant le signal de commande (N).

7. Processeur de réception ou procédé selon la revendication 1 ou l'une quelconque des revendications 3 à 6, pour autant qu'elle dépende de la revendication 1, caractérisé en ce que

deux étages de conversion de fréquence sont utilisés pour l'obtention dudit signal de sortie (J), le premier étage (20,21) utilise une oscillation à fréquence fixe (22) pour l'exécution de la conversion de fréquence, par multiplication de la fréquence d'au moins l'une desdites parties, et le second étage (26,27) utilise le signal de commande (N) pour exécuter une autre conversion de fréquence par multiplication de fréquence des signaux dérivés du premier étage (20,21),

les signaux (F,G) délivrés par le premier étage sont filtrés par des premiers processus de filtrage de réception pour l'élimination des signaux de bande latérale indésirables avant leur application au second étage, et

les signaux (H,I) fournis par les premiers processus de filtrage de réception sont filtrés par des processus de filtrage de sélection (30,31) présentant lesdites troisième et quatrième caractéristiques de coupure pour produire les premier et second signaux (K, L).

8. Système de communication comprenant un processeur de réception selon l'une quelconque des revendications précédentes, pour autant qu'elle dépende de la revendication 1, et un processeur d'émetteur servant à produire un signal d'émission, à partir duquel est dérivé le signal reçu, caractérisé en ce que le signal d'émission (D) est dérivé d'un signal original (A) qui possède un spectre de fréquences comportant des parties supérieure et inférieure séparées par une encoche.

9. Système de communication selon la revendication 8, pour autant qu'elle dépende de la revendication 7, caractérisé en ce que le processeur d'émetteur comprend des moyens (13,14,15) pour la conversion de fréquence et un système de filtrage d'émission (11,12) du signal de la bande de base pour l'obtention du signal d'émission, et

les première et seconde caractéristiques de coupure dépendent du filtrage d'émission et des premiers processus de filtrage de réception.

10. Système de communication selon la revendication 9, caractérisé en ce que le système de filtrage d'émission utilise des filtres symétriques possédant également des réponses $H_{1+}(f)$ et $H_{1-}(f)$ respectivement pour les parties supérieure et inférieure,

la sélection des premier et second signaux est réalisée moyennant l'utilisation de filtres symétriques présentant des réponses $H_{2-}(f)$ et $H_{2+}(f)$ pour la sélection respectivement à partir des parties supérieure et inférieure, et

les conditions suivantes sont satisfaites

$$|H_{1+}(f)|^2 = H_{2+}(f) \text{ et}$$
$$|H_{1-}(f)|^2 = H_{2-}(f).$$

10
A
$f_d$
A
f
$H_{1-}(f)$
11
12
$H_{1+}(f)$
B
$f_d$
f
B
C
$f_d$
C
f
13
15
14
B'
$f'_d$
f
$f_d'$
C'
C'
f
B'
16
Σ
D
D
$f'_d$
f

Fig. 1

E
$f'_d$
E
f
20
21
22
F
$f''_d$
f
F
G
$f''_d$
G
f
$H_{1-}(f)$
24
25
$H_{1+}(f)$
31
32
30
$H_{2+}(f)$
$H_{2-}(f)$
H
$f''_d$
f
K
L
I
$f''_d$
I
f
H
M
TIME DELAY
55
TIME DELAY
56
39
NOISE FILTERING
NORMALISATION
DIVIDE BY TWO
N
26
27
28
Σ
J
f

Fig. 2

K(f)
33
31'
35
δω
f
Fig. 3a

L(f)
30'
34
36
δω
f
Fig. 3b

M(f)
38
37
2δω
f
Fig. 3c

K(f)
33
40
$f_d''$
f
$\delta\omega$
41
Fig. 4a
L(f)
42
34
$f_d''$
f
$\delta\omega$
43
Fig. 4b
M(f)
f
$2\delta\omega$
Fig. 4c
N(f)
f
$\delta\omega$
Fig. 4d

LPF
46
NORM
47
÷2
48

Fig. 5a

51
52
54
×2
LPF
50
53

Fig. 5b